# EUROPEAN PATENT SPECIFICATION

(11) **EP 1 909 465 B1**
(45) Date of publication and mention of the grant of the patent: **17.03.2010**
(21) Application number: 06025635.1
(22) Date of filing: 12.12.2006
(51) Int. Cl.: H04L 29/08, H04L 12/28

(54) **Method and system for data communication in a wireless infrastructure based communication network**
Verfahren und System zur Datenkommunikation in einem auf einer drahtlosen Infrastruktur basierenden Kommunikationsnetzwerk
Procédé et système d'échange de données dans un réseau de communication reposant sur une infrastructure sans fil

(30) Priority: 02.10.2006 EP 06020686
(43) Date of publication of application: 09.04.2008
(73) Proprietor: Deutsche Telekom AG, 53113 Bonn (DE)
(72) Inventor: Hsieh, Robert, 10629 Berlin (DE)

(56) References cited:
- EP-A- 1 389 856
- EP-A- 1 458 165
- WO-A-2004/075169
- WO-A-2005/043835
- TOMMO RETI ET AL: "Broadcasting Commercial Data on Mobile Peer-to-Peer Networks" INTERNET CITATION, [Online] 2002, XP002403939 Retrieved from the Internet: URL:http://www.tml.hut.fi/Research/STAMI/p ublications/Broadcasting%20Comm ercial%20Data%20on%20Mobile%20Peer-to-Peer %20Networks.pdf> [retrieved on 2006-10-20]

## Description

### Field of the invention

The invention relates to communication processes in general, and especially to a method for communication in a wireless infrastructure based communication network and to an accordingly adapted mobile communication device, network controller element and communication system.

### Background of the invention

Mobile communication devices like mobile phones have become constant companions for a large percentage of the population and are increasingly used for more than just speech communication. Today such devices are provided with additional applications like SMS or MMS based messaging, email or other data services, thereby increasing the demand for bandwidth.

Wireless communication networks typically are so-called infrastructure wireless networks in which the mobile devices communicate with a base station instead of directly with each other. Peer-to-peer communication between mobile communication devices so far has not been employed in large-scale communication networks, especially in cellular telecommunication networks, due to expected significant interference problems.

Accordingly, current application of peer-to-peer wireless communication is restricted to a model pertaining to the local dissemination of data in Wireless Local Area Network (WLAN) environments. A typical example is the Direct Link Protocol (DLP) specified in the 802.11 e specification. The DLP allows for direct communication between two clients of a WLAN after performing a handshake via the access point, wherein the handshake comprises a request to communicate initiating from a client and sent to the access point which passes it on to the requested client, and a respective acknowledgment which is sent back to the requesting client via the access point. As compared to communicating via the access point, direct communication provides for an increased available bandwidth. Such peer-to-peer communication, however, is restricted to localized areas.

From WO 2005/043835 A1 a method for ad hoc communication between radio stations of a WLAN network is known, wherein data messages are transmitted either directly between radio stations or via a routed path that passes through one or more radio stations. In order to achieve a more efficient transmission along such paths neighboring information, comprising information on neighboring radio stations of a given radio station, is transmitted from the radio stations to a base station, wherein the base station typically is associated with a second wireless communication network, in particular a cellular network. In response to receiving a request from a radio station the base station calculates a path from the neighboring information and transmits a control message to the requesting radio station which comprises routing information along with information on the radio resources to be used by the radio stations. In response to receiving the control signal from the base station, the respective radio station transmits data to the destination radio station along a path defined by the received routing information.

From US 7 016 673 B2 also a wireless communication method and system is known, in which a mobile communication device is used alternatively for infrastructure communication via network base stations and for peer-to-peer communication with other such mobile communication devices. For this purpose the mobile communication devices are provided with two different transceiver means, one for peer-to-peer communication and one for infrastructure communication. The selection of infrastructure or peer-to-peer communication is made for instance depending on Quality of Service criteria.

It is an object of the present invention to show a new and improved approach to use the available transmission resources within an infrastructure based wireless network more efficiently. Another object of the invention is to increase downlink traffic throughput from a controller station to a plurality of mobile stations in an infrastructure based wireless network, in particular for data distribution or broadcast-like services. Still another object of the invention is to reduce the diffusion time for data distribution in an infrastructure based wireless network, i.e. the time needed for distributing certain data to a plurality of mobile stations.

### Summary of the Invention

The inventive solution of the object is achieved by each of the subject matter of the respective attached independent claims. Advantageous and/or preferred embodiments or refinements are the subject matter of the respective attached dependent claims.

The inventive method for communication in a wireless infrastructure based communication network accordingly comprises the steps of transmitting a control signal from a base station to a first mobile communication device, retrieving at least one data item from a memory of the first mobile communication device and transmitting a data signal comprising said at least one data item from the first mobile communication device to a second mobile communication device in response to receiving said control signal, wherein the data signal is transmitted via a peer-to-peer connection between the first and the second mobile communication devices.

Peer-to-peer communication preferably is provided as a direct single-hop wireless communication. A base station according to the invention can be, but is not limited to, a base station of a GSM cellular wireless communication network, a Node B of a UMTS network, an access point of a WLAN or any other, also future, interfacing device for providing wireless access to a communication network. Accordingly, the wireless infrastructure based communication network according to the invention can be, but is not limited to, a GSM network, a UMTS network, a WLAN or any other communication network comprising multiple base stations. In a WLAN environment the described method advantageously can be implemented in an especially easy way, since only minor modifications to existing devices are needed. A mobile communication device according to the invention can be any portable device capable of wireless data communication, as for instance a mobile phone, a PDA, an MDA, a Pocket PC, a Tablet PC, a notebook or a MicroPC, like for instance a Sony Vaio UX50 type of device.

The purpose of the control signal is to trigger a centrally controlled peer-to-peer data transmission from the first to the second mobile communication device. Since a controlling instance arranged centrally in the communication network, in the following also referred to as a network controller element, controls the peer-to-peer communication, the transmitting mobile communication device is provided with parameters for the peer-to-peer connection by means of the control signal. With advantage the control signal comprises parameters defining at least one mobile communication device to be connected, a power level to be used for the transmission, a duration of the transmission, and a wireless channel to be used for transmission.

Since by means of the peer-to-peer connection a data signal is transmitted which comprises at least one data item retrieved from the memory of the transmitting mobile communication device, the control signal advantageously further comprises information for selecting the at least one data item to be transmitted.

With special advantage the data signal is transmitted by the first mobile communication device during an established communication session between the base station and the first mobile communication device, wherein transmission of said data signal is performed by means of the same transceiver means of the mobile communication device which is also used for communication with the base station. Accordingly, the method advantageously provides for infrastructure based communication between the first mobile communication device and the base station and virtually simultaneous peer-to-peer communication between the first and the second mobile communication devices.

This is achieved by a very short duration of the peer-to-peer connection, wherein the duration is short enough not to terminate the established communication session between the first mobile communication device and the base station. Typically the duration of the peer-to-peer connection is in the range of milliseconds, i.e. between 1 and 500 ms, in particular between 5 and 100 ms, for instance around 15 ms, depending on the communication protocol of the infrastructure communication network.

Since the peer-to-peer connection is controlled by a controller element located centrally in the communication network typically having access to a plurality of base stations, for the peer-to-peer connection it is not even necessary that the mobile communication devices are located in the coverage area of the same base station, they only need to be within transmission range of each other. Accordingly, with advantage the first and second mobile communication devices can be located in the respective coverage area of different base stations when the step of transmitting the data signal via a peer-to-peer connection is performed by the first mobile communication device. This allows for a high degree of flexibility.

Two mobile communication devices which communicate via the infrastructure communication network consume twice as much resources as compared to a peer-to-peer communication. In one preferred embodiment this double resource consumption problem is solved by employing peer-to-peer communication on detection of persistent communication between two given mobile communication devices. Accordingly, the method in this preferred embodiment comprises the steps of monitoring the data traffic between the first and the second mobile communication devices and of transmitting the control signal when a communication between the first and the second mobile communication device via the infrastructure communication network lasting for a pre-defined duration is detected and the first and the second mobile communication devices are within transmission range to one another.

With great advantage the method is employed for distributing data from a central data or media server to a plurality of mobile communication devices, based on the idea of shifting data loads from the base stations to the mobile communication devices by instructing them to communicate directly. In a most preferred embodiment the method therefore provides for pre-defined data being distributed to a plurality of mobile communication devices from a media server connectable to the communication network. In this embodiment the method comprises the steps of dividing said pre-defined data into data portions, transmitting different of said data portions to different mobile communication devices via base stations of the communication network, and spreading the data portions between the mobile communication devices by means of peer-to-peer connections centrally controlled by a network controller element.

The network controller element further preferably is adapted to push data portions anytime to any specific mobile communication device in order to satisfy a given level of QoS (Quality of Service). The combination of pushing data portions and additionally spreading data portions by means of a centrally coordinated peer-to-peer communication with great advantage leads to a decrease of diffusion time as compared to known data distribution methods.

Known peer-to-peer networks are not centrally coordinated, resulting in situations in which clients have to wait for a long time to receive a specific data protion from another client. In the method described herein this problem is solved simply by the capability of the network controller element to push data portions directly to selected mobile communication devices, resulting in a much higher level of quality assurance for data distribution services.

Accordingly, the method preferably comprises the step of transmitting at least one of said data portions to a selected mobile communication device via a base station of the communication network, when after a pre-defined time interval said selected mobile communication device has received said at least one data portion neither via base stations of the communication network nor by means of a peer-to-peer communication.

A basic concept of the invention is the exploitation of human mobility in an infrastructure based wireless communication network. The spreading of said data portions is highly promoted by mobile communication devices moving along coverage areas of different base stations and accordingly passing through the transmission ranges of a plurality of other mobile communication devices. Therefore, most preferably, prior to the step of transmitting the control signal the first mobile communication device receives and stores the at least one data item when located in the coverage area of a first base station and the step of transmitting the data signal via a peer-to-peer connection is performed by the first mobile communication device when located in the coverage area of a second base station. Of course, the first mobile communication device can also be located in the coverage are of the same base station when receiving a certain data item and when retransmitting it via a peer-to-peer communication to a second mobile communication device.

In situations, in which each of the first and the second mobile communication devices already has received data parts the respective other device still needs to receive, respective control signals are sent to both mobile communication devices instructing them to exchange the respective data parts via a peer-to-peer communication.

In one preferred embodiment of the method the pre-defined data is requested by a user of a mobile communication device, wherein the pre-defined data for instance is a weather forecast for the day. In another preferred embodiment the pre-defined data is distributed automatically, initiated by a central network controller element, in order to provide for instance a news push service or to provide a software update to a plurality of mobile communication devices. Both cases are based on the idea that the data to be transferred to a given mobile communication device at least in part is available from at least one other mobile communication device, typically because the other mobile communication device already received that data part from a base station or also via a peer-to-peer communication. Therefore, with advantage the data item stored in the first mobile communication device to be transmitted via a peer-to-peer communication to the second mobile communication device is a copy of at least part of the data requested by the second mobile communication device.

In another preferred embodiment the data to be distributed is provided by a user of a mobile communication device, who for instance wants to distribute personal video content. In this embodiment the content diffusion preferably is started from the initiating mobile communication device, in the memory of which resides the pre-defined data to be distributed, by sending an according transmission request to a network controller element of the network.

Accordingly, in this embodiment by means of a centrally coordinated peer-to-peer connection preferably at least part of the pre-defined data provided by the first mobile communication device is transmitted to the second mobile communication device.

By copying the pre-defined data to a central network controller element with special advantage the benefits of transporting data to geographically distant areas and of assisting the data diffusion in case of low contact probability between the initiating mobile communication device from which the content originates and other mobile devices can be utilized.

Accordingly, with advantage a copy of at least part of said pre-defined data is transmitted to a network controller element to be distributed to at least one mobile communication device outside of the transmission range of the initiating mobile communication device.

For controlling the centrally coordinated peer-to-peer communication the network controller element advantageously receives and stores for each of at least a subgroup of the mobile communication devices which are connected to the communication network location information and information on data items stored in each member of said subgroup, wherein said location information and information on stored data items is regularly updated.

Preferably said location information comprises information on the relative transmission range between members of said subgroup, since the relative transmission range is relevant for the peer-to-peer communication rather than the geographical location.

For coordinating the peer-to-peer communication most preferably a schedule for future peer-to-peer connections is generated by the network controller element depending on the stored location information and information on data items stored in the mobile communication devices. Depending on the schedule the network controller element then generates the control signals for instructing selected mobile communication devices to transmit pre-defined data via a peer-to-peer communication.

The easiest and fastest implementation of the described method can be achieved in a WLAN environment, since such environments can be limited to a given size and since only minor modifications to existing WLAN devices are needed. The described method most beneficially is performed in a WLAN comprising multiple interconnected access points.

The method, however, is not limited to WLAN environments. Since the described method achieves the greatest benefit in large-scale infrastructure based wireless communication networks comprising a plurality of base stations and a plurality of mobile communication devices, it can also with great advantage be employed in cellular GSM- or UMTS-based telecommunication networks or in any other communication network comprising multiple base stations.

By utilizing the method it is expected to achieve a two orders of magnitude gain in terms of downlink traffic throughput from the controller's perspective. In other words, the cost of content distribution given by downlink traffic is shifted from the controller to the mobile stations or mobile communication devices by way of centrally coordinated peer-to-peer communication.

An inventive mobile communication device for use in a wireless infrastructure based communication network, comprises transceiver means for wireless communication, processing means for processing a control signal received via said transceiver means form a base station of a wireless infrastructure communication network, and controlling means for automatically initiating a data transmission via said transceiver means to a second mobile communication device in response to receiving said control signal, wherein said data transmission is a peer-to-peer transmission based on parameters extracted from said control signal.

Since the peer-to-peer communication is centrally controlled, the control signal comprises parameters for the peer-to-peer connection to be initiated, preferably defining at least one mobile communication device to be connected, a power level to be used for transmission, a duration of the transmission, and a wireless channel to be used for transmission. With advantage the mobile communication device is adapted to perform the peer-to-peer communication by means of an ambient burst communication and is therefore preferably accordingly adapted.

With special advantage the mobile communication device is adapted for simultaneous wireless communication with a base station and a second mobile communication device, wherein the communication with the second mobile communication device is a peer-to-peer communication. Simultaneous in this respect means that an established communication session between the mobile communication device and the base station is not terminated when transmitting data peer-to-peer to the second mobile communication device. This is preferably achieved by using an ambient burst communication of very short duration for the peer-to-peer connection.

Since with advantage two mobile communication devices forming a constellation pair can exchange data with each other by means of a peer-to-peer communication, the mobile communication device preferably also is adapted for receiving a peer-to-peer transmission from a second mobile communication device.

Preferably the mobile communication device further comprises means for detecting other mobile communication devices within transmission range. That way a network controller element arranged centrally in the infrastructure wireless communication network can be provided with information on relative transmission ranges between pairs of mobile communication devices.

Preferably the mobile communication device is adapted to transmit data requests to a network controller element of the network, wherein in one embodiment the mobile communication device requests to receive pre-defined data and in another embodiment requests to transmit pre-defined data that is provided by the mobile communication device, for instance digital photos or video content stored in a memory of the device.

With advantage a transmission request comprises information for identifying other mobile communication device to which the pre-defined data is to be distributed. Such information can for instance comprise phone numbers retrieved from a phonebook integrated in the initiating mobile communication device.

An inventive network controller element of a wireless infrastructure based communication network, in particular adapted for performing a method as described above, comprises a memory for storing for each of at least a subgroup of the mobile communication devices, which are connected to said communication network, location information and information on data items available from each member of said subgroup, controlling means for coordinating the distribution of pre-defined data to said subgroup of mobile communication devices, and generating means for generating control signals to be transmitted to a selected mobile communication device, said control signal comprising parameters for peer-to-peer connections of pairs of members of said subgroup.

Each generated control signals comprises parameters for an individual peer-to-peer connection defining at least one mobile communication device to be connected, a power level to be used for transmission, a duration of the transmission, and a wireless channel to be used for transmission. Each control signal further comprises information defining at least one data item to be transmitted, wherein said data item is stored in the mobile communication device to which the control signal is to be transmitted.

Since the actual physical distance between members of said subgroup typically is not a useful value to be utilized for determining the possibility of establishing a peer-to-peer communication between the members, the location information stored in the network controller element preferably comprises information on the relative transmission range between members of said subgroup. Further, the location information can also comprise reachability information for member pairs of the subgroup or the power level necessary for a peer-to-peer communication between members of the subgroup.

With advantage the network controller element comprises monitoring means for monitoring data traffic between mobile communication devices connected to the communication network.

For processing user requests the network controller element further preferably comprises receiving means for receiving data requests from mobile communication devices connected to the communication network.

As described above a user request can with advantage be a request to transmit pre-defined data residing in the user's mobile communication device to other mobile communication devices. Accordingly, the network controller element preferably is adapted to receive the pre-defined data to be distributed from a mobile communication device.

For this purpose the network controller element advantageously is adapted to, in response to receiving such a transmission request from a mobile communication device, instruct the mobile communication device to send a copy of the pre-defined data to the network controller element.

For data distribution purposes the network controller element advantageously is adapted to divide pre-defined data into data portions, to transmit different of said data portions to different mobile communication devices via base stations of the communication network, and to generate control signals for spreading the data portions between the mobile communication devices by means of peer-to-peer connections. For this purpose the network controller element most preferably is further provided with scheduling means for generating a schedule for future peer-to-peer connections depending on the stored location information and on the stored information on data items available from the members of the subgroup.

Furthermore, a wireless infrastructure based communication system lies within the scope of the invention, comprising a plurality of base stations, at least one network controller element as described above, connectable to said base stations, and a plurality of mobile communication devices as described above.

To provide an easy implementation and/or specific adaptation, a digital storage medium is proposed, comprising electronically readable control instructions adapted to execute any of the embodiments of the above described method, when inserted in a mobile communication device having the above described features. Accordingly, a digital storage medium is proposed, comprising electronically readable control instructions for controlling a first mobile communication device adapted to execute a process comprising the steps of processing a control signal received form a base station of a wireless infrastructure communication network, and initiating a peer-to-peer connection with a second mobile communication device based on parameters extracted from said control signal. Most preferably the peer-to-peer connection is initiated and terminated during an established communication session between the first mobile communication device and the base station.

### Brief Description of the Figures

It is shown in
- Fig. 1: a schematic view of a preferred embodiment of an infrastructure based wireless communication system,
- Fig. 2: a schematic view of a preferred embodiment of a network controller element,
- Fig. 3: a schematic view of a preferred embodiment of a mobile communication device,
- Fig. 4: a flowchart of the scheduling process of a preferred embodiment of a network controller element,
- Fig. 5: exemplary results of a simulation showing downlink data load,
- Fig. 6: exemplary results of a simulation showing data diffusion time.

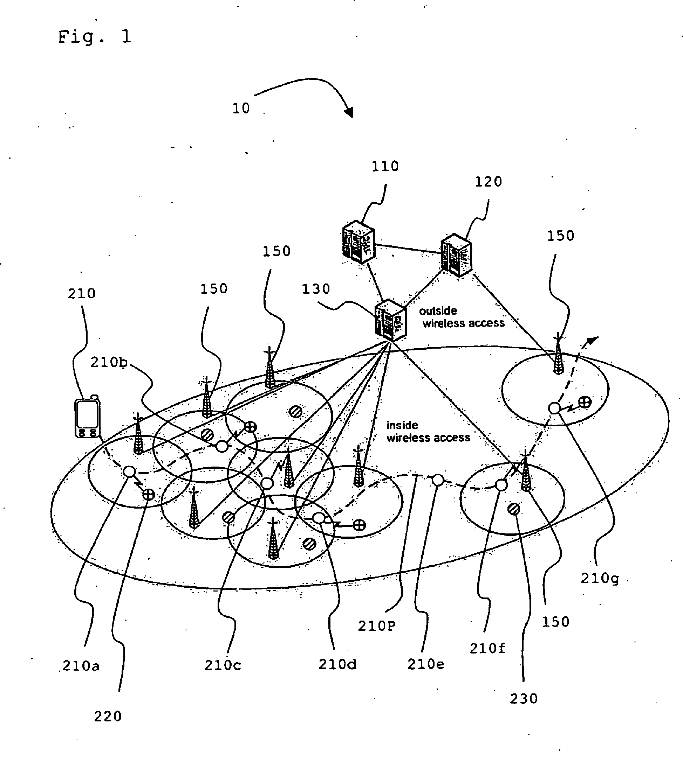

Fig. 1 shows a preferred embodiment of an infrastructure based wireless communication network 10, comprising controller elements 110, 120 and 130, a plurality of base stations indicated by reference numeral 150, and a plurality of mobile communication devices, the locations of which are depicted by small circles. For one selected mobile communication device 210 consecutive locations 210a - 210g are shown while the user of the mobile communication device 210 moves through the coverage area of different base stations 150 along path 210P. The exploitation of this human mobility dimension in achieving capacity gain within an infrastructure based wireless access network 10 is one of the main aspects of the invention. For simplicity purposes it is assumed that the other mobile communication devices, exemplary indicated by reference numerals 220 and 230, don't move while mobile communication device 210 moves along path 210P.

The inventors found that a significant gain in capacity is possible in an infrastructure based wireless network when it is augmented with an appropriate centrally coordinated temporal pairing mechanism between the mobile stations which exploits the temporal, the spatial and the human mobility dimensions.

The wireless communication network 10 as shown in Fig. 1, though in principal infrastructure based, provides for an efficient centrally coordinated temporal peer-to-peer wireless communication access network, wherein a centralized scheduling scheme instructs the constellation formation for two mobile stations through relaying control messages or control signals via the base stations, specifying to what mobile station or set of mobile stations one particular mobile station shall form the direct one-hop communication, i.e. act as the transmitter node, at what power level the transmission shall take place, how long the transmission duration shall be and at what wireless channel the transmission shall be taking place.

In the embodiment shown in Fig. 1, the mobile communication device 210 is to receive media content, a copy of which resides in a media server, wherein the media server can be comprised in either of the controller elements 110, 120 or 130 or can be provided as a separate device connected to the network 10 not shown in Fig. 1. The transfer of media content is either actively requested by the user of mobile communication device 210 or initiated by the media server, for instance for providing advertising, a software update or data of a push service.

Since the same media content or pieces of it has already been received by other mobile communication devices, indicated by reference numeral 220, opportunistic temporal-pairing of mobile station 210 and the mobile stations 220 is established to exchange media pieces by peer-to-peer communication, centrally coordinated by an accordingly adapted network controller element, as for instance controller element 110, 120 or 130. For this purpose each network controller element keeps track of the partial media content stored in each mobile communication device within its administrative domain. Since the temporal-pairing for peer-to-peer communication is centrally coordinated, the mobile stations typically do not have knowledge of the content stored in other mobile stations. Whenever mobile communication device 210 moves into transmission range of another mobile communication device 220, which has stored data pieces to exchange, it is instructed to establish a peer-to-peer communication, as shown at locations 210a, 210b, 210d and 210g.

Media pieces can also be pushed to the mobile communication device 210 from outside the wireless access via base stations 150, as shown in locations 210c and 210f. By reference numeral 230 mobile stations are depicted without media pieces to exchange with mobile station 210. With advantage pairing can be provided between one mobile station that is located in the coverage area of one base station and another mobile station that is located in the coverage area of an adjacent base station, as shown at location 210b.

An object is to keep the control logic for data distribution outside the wireless access while the actual media distribution transportation stays inside the wireless access as much as possible, thereby shifting data loads towards the mobile stations.

In a further embodiment the data to be distributed is originally provided by a mobile communication device. This is typically the case when a user of a mobile communication device wants to distribute personal data, like for instance digital photos or video sequences captured by the user, to other users of mobile communication devices.

In this embodiment the content diffusion is started from the mobile communication device itself instead of form the media server collocated with the network controller element, wherein the role of the network controller element remains unchanged as it is still the entity centrally controlling the peer-to-peer communication.

In order to transport data to geographically distant areas and/or to assist data diffusion in case of low contact probability between the initiating mobile communication device from which the content originates and other mobile devices, a copy of the content preferably is provided to the network controller element. For this purpose the network controller element preferably instructs the initiating mobile communication device to upload a copy of the content to the network controller element in response to receiving an according transmission request from the initiating mobile communication device.

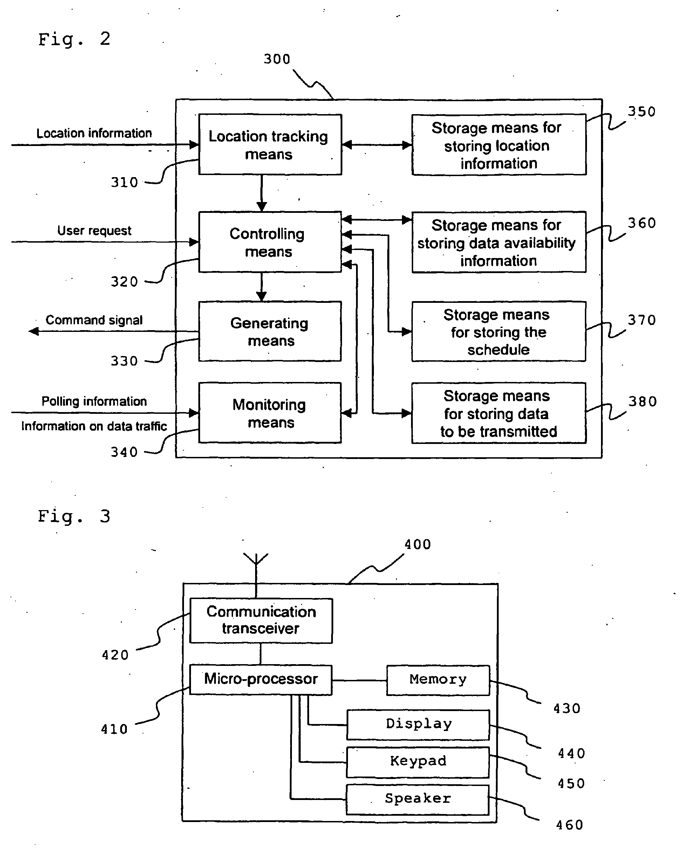

A preferred embodiment of a network controller element 300 for centrally controlling the data distribution is shown in Fig. 2, wherein network controller element 300 can for instance be arranged in controller element 110, 120 or 130 of Fig. 1.

Network controller element 300 is provided with controlling means 320 for coordinating the distribution of pre-defined data like certain media content to a group of mobile communication devices within its administrative domain. For this purpose it is adapted to divide said pre-defined data into data portions, to transmit different of said data portions to different mobile communication devices via base stations of the communication network, and to generate control signals for spreading the data portions between the mobile communication devices by means of peer-to-peer connections.

Accordingly, the network controller element 300 is further provided with storage means 380 for storing data to be transmitted. The data to be transmitted could also reside in a separate media server. For keeping track of the media content stored in each mobile communication device, respective storage means 360 for storing data availability information are provided.

The controlling means 320 most preferably comprises scheduling means for generating a schedule for future peer-to-peer connections which is stored in respective storage means 370. The schedule is generated depending on the data to be transferred, defined by incoming user requests or by pre-defined data to be pushed, on the availability information stored in storage means 360, and on location information of the mobile communication devices. The location information comprising the relative transmission range between mobile communication devices is provided by location tracking means 310 which receives location information and stores it in respective storage means 350.

Based on the schedule control signals comprising parameters for peer-to-peer connections of pairs of mobile communication devices are generated by respective generating means 330, wherein the control signals or control messages preferably comprise information defining one or more mobile communication devices to be connected, a power level to be used for transmission, a duration of the transmission, and a wireless channel to be used for transmission.

The scheduling algorithm derives the above quadruplets from the supporting location tracking system 310 which gives the algorithm the relative transmission range between mobile stations. When such information is augment with power level control, the scheduler can exploit the temporal and spatial throughput gain by forming multiple constellation pairs and instructing them to carry out transmission at the same time. The constellation formation also depends on the application layer content dissemination process which is depicted by a tit-for-tat exchange model. Media content preferably is subdivided into multiple data portions which are exchanged between mobile stations which can mutually benefit for an exchange transaction. The constellation is self-destructed after the transmission has taken place.

In order to be able to monitor the relaying of control signals via the base stations to the mobile communication devices and to monitor the execution of peer-to-peer communications respective monitoring means 340 are provided. Optionally the monitoring means 340 can also be used for monitoring data traffic in order to generate control signals when persistent communication via the infrastructure network is detected between two mobile communication devices which are within transmission range to one another.

There is provided for a centrally coordinated direct node-to-node ambient burst communication between constellation pairs within a wireless access network, wherein the network comprises multiple base stations and/or controller stations, and wherein communities of users with their respective mobile communication devices move in-between multiple coverage areas. Advantageously, for scheduling the formation of constellation pairs the spatial, the temporal, and the human mobility dimensions are exploited.
A preferred mobile communication device can be based on commonly available hardware supplemented with an accordingly adapted software. A usable mobile communication device can for instance be a PDA 400 as shown in Fig. 3.
Special software enabling the PDA 400 to establish a peer-to-peer communication to another similar PDA in response to receiving a respective control signal from a base station is stored in memory 430 and executed by micro-processor 410. PDA 400 preferably is adapted to communicate with the base station and to perform the peer-to-peer communication by means of the same communication transceiver 420. In the shown embodiment the PDA 400 is further provided with a display 440, a keypad 450 and a speaker 460.

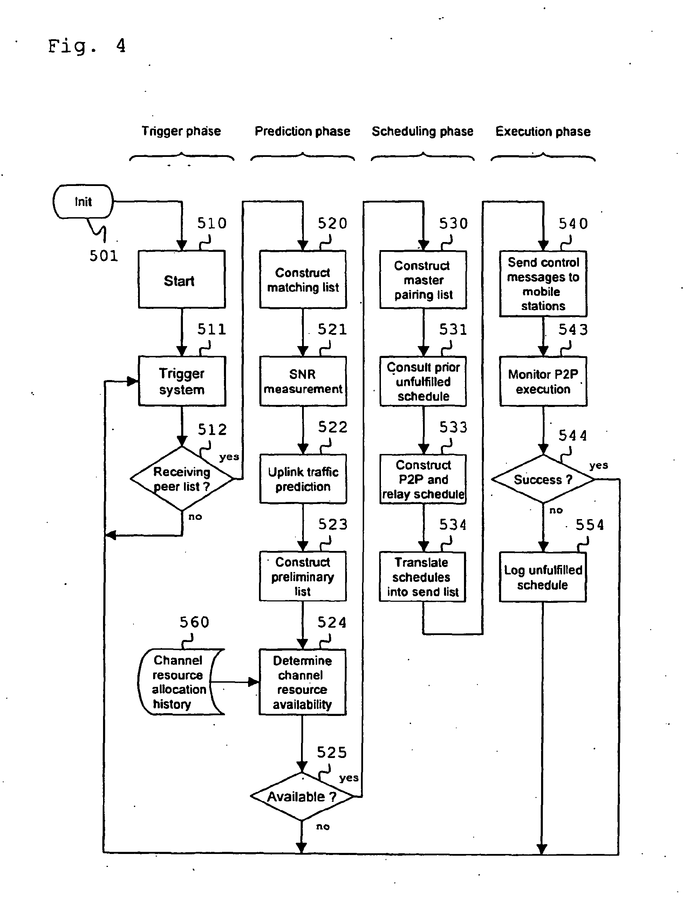

In Fig. 4 a flowchart of the scheduling and execution process for data distribution controlled by a preferred embodiment of a network controller element is shown.

In the shown embodiment four phases can be distinguished, namely the trigger phase, the prediction phase, the scheduling phase and the execution phase. In the trigger phase after initialization 501 the process is started 510 and the system for data distribution based on peer-to-peer communication is triggered 511. The system is repeatedly triggered until a peer list is received 512 comprising information on mobile communication devices within the administrative domain of the network controller element.

After receiving the peer list 512 the prediction phase is started by constructing a matching list 520 comprising pairs of mobile communication devices within transmission range to each other and with data to exchange. From this a preliminary list is constructed 523 taking into account SNR (signal-to-noise ratio) measurements 521 and an uplink traffic prediction 522. Then the channel resource availability is determined 524 based on the stored channel resource allocation history 560. If channel resources are available 525, the scheduling phase is started, otherwise the system is newly triggered 511.

In the scheduling phase first a master pairing list is constructed 530. For the case that prior scheduled transmissions were unsuccessful the prior unfulfilled schedule is consulted 531 and the peer-to-peer and relay schedules are constructed 533. The peer-to-peer schedule comprises information on scheduled peer-to-peer communication initiated by respective control signals transmitted to the mobile communication devices and the relay schedule comprises information on relaying the control signals to the mobile communication devices via the base stations. The schedules are then translated into a send list 534.

The execution phase begins with sending control messages or control signals to the scheduled mobile communication devices 540 according to the constructed send list. The execution of the peer-to-peer transmissions is monitored 543 and if it is successful 544, the system is newly triggered 511. If the peer-to-peer execution is not successful 544, the unfulfilled schedule is stored in a log 554.
The working principle of the described method has been proven by the inventors through simulation and experiment.

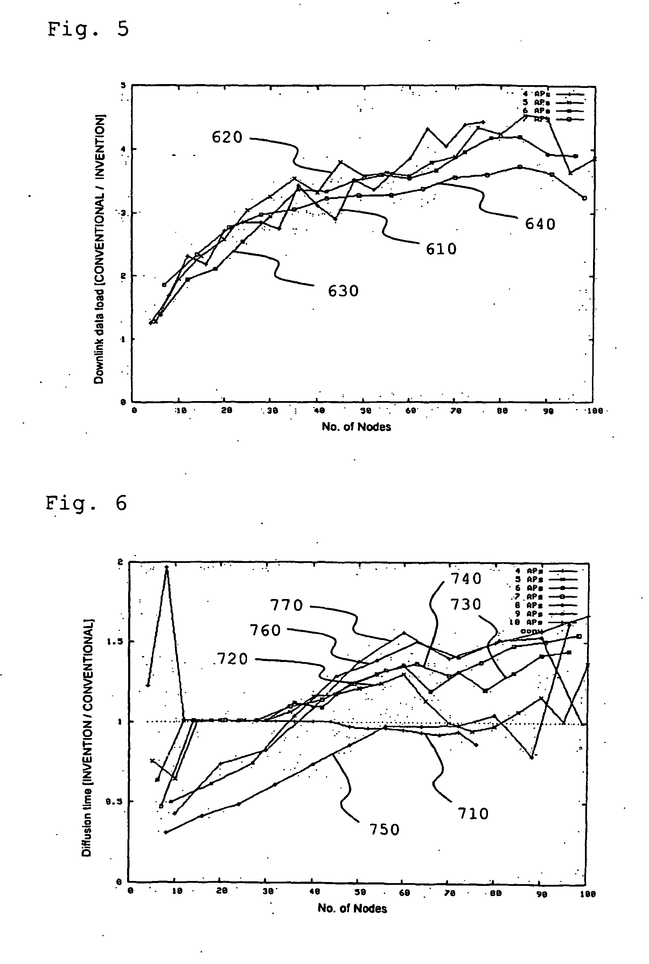

Fig. 5 shows simulations proving that capacity gain can be achieved. Shown is the relation of downlink data load when utilizing conventional methods and when utilizing the method described herein depending on the number of mobile communication devices or nodes. The shown results 610, 620, 630 and 640 are calculated for an infrastructure based wireless communication network comprising respectively 4, 5, 6 and 7 base stations. It can be seen quite clearly that already for such small systems a capacity gain by a factor above 4 can be achieved. For larger networks an even greater capacity gain is expected.

In Fig. 6 simulation results on the also interesting aspect of diffusion time is shown, wherein diffusion time is the time needed to distribute a pre-defined data amount to a group of mobile communication devices. Shown is the relation of diffusion time needed when using conventional methods and diffusion time needed when using the method described herein depending on the number of mobile communication devices. The shown results 710, 720, 730, 740, 750, 760 and 770 are calculated for an infrastructure based wireless communication network comprising respectively 4, 5, 6, 7, 8, 9 and 10 base stations. It can be seen that with rising number of involved mobile communication devices the diffusion time needed when utilizing the method described herein as compared to conventional methods decreases, so that in large systems it can be expected that the diffusion time is significantly reduced.

The advantage of associating an infrastructure based wireless access network with peer-to-peer communication is that the mobility of mobile stations, i.e. human mobility, becomes a significant exploit factor. With calculated coordinated temporal pairing, the capacity of the network can be increased by several folds, as has been shown by the simulations. Such increase in capacity, or in other words the freeing of capacity, can then be translated into cost benefits for the operator in the form of new services or reduction in operating costs.
The method and system described herein most preferably can be utilized for ambient dissemination of broadcasting data, like for example the distribution of mobile handset software updates or multimedia advertisement in the form of video files. Also an alternative approach to mobile broadcasting is enabled, for example by substituting the traditional mobile broadcasting model by a subscribe and deliver model. This approach maybe applicable to all types of broadcasting scenarios including video-ondemand, non-live broadcasting or streaming. Leveraging on the fact that customers act as content distribution partners, the business model can provide for a simple rebate format or can be based on a fair revenue sharing model. Thus, there is provided a new form of content distribution platform within the mobile and wireless environment.

## Claims

1. A method for data communication in a wireless infrastructure based communication network (10), comprising the steps of
- generating a control signal by a network controller element (300),
- transmitting said control signal from a base station (150) to a first mobile communication device (220),
- retrieving at least one data item from a memory of the first mobile communication device (220) and
- transmitting a data signal comprising said at least one data item from the first mobile communication device (220) to a second mobile communication device (210) in response to receiving said control signal, wherein the data signal is transmitted via a peer-to-peer connection between the first (220) and the second (210) mobile communication devices, **characterized in that** the data signal is transmitted by the first mobile communication device (220) during an established communication session between the base station (150) and the first mobile communication device (220).

2. The method according to claim 1, wherein the control signal comprises parameters of the peer-to-peer connection defining
- at least one mobile communication device (210) to be connected,
- a power level to be used for transmission,
- a duration of the transmission, and
- a wireless channel to be used for transmission.

3. The method according to any one of the preceding claims, wherein the control signal comprises information for selecting at least one data item to be transmitted.

4. The method according to any one of the preceding claims, wherein the duration of the peer-to-peer connection is short enough not to terminate the established communication session between the first mobile communication (220) device and the base station (150).

5. The method according to any one of the preceding claims, wherein said first (220) and second (210) mobile communication devices are located in the respective coverage area of different base stations (150) when the step of transmitting the data signal via a peer-to-peer connection is performed by the first mobile communication device (220).

6. The method according to any one of the preceding claims, comprising the steps of
- monitoring the data traffic between the first (220) and the second (210) mobile communication devices, and
- transmitting the control signal when
- a communication between the first (220) and the second (210) mobile communication device via the infrastructure communication network lasting for a pre-defined duration is detected and
- the first (220) and the second (210) mobile communication devices are within transmission range to one another.

7. The method according to any one of the preceding claims, wherein prior to the step of transmitting the control signal the first mobile communication device (220) receives and stores the at least one data item when located in the coverage area of a first base station (150) and wherein the step of transmitting the data signal via a peer-to-peer connection is performed by the first mobile communication device when located in the coverage area of a second base station (150).

8. The method according to any one of the preceding claims, wherein said second mobile communication device (210) requests to receive data from a server (110, 120, 130) connected to the communication network (10), and wherein said data item stored in the first mobile communication device (220) is a copy of at least part of the requested data.

9. The method according to any one of the preceding claims, wherein pre-defined data is distributed to a plurality of mobile communication devices from a media server (110, 120, 130) connectable to the communication network (10), comprising the steps of
- dividing said pre-defined data into data portions,
- transmitting different of said data portions to different mobile communication devices (210, 220) via base stations (150) of the communication network (10),
- spreading the data portions between the mobile communication devices (210, 220) by means of peer-to-peer connections centrally controlled by the network controller element (300).

10. the method according to claim 9, wherein said network controller element (300) receives and stores for each of at least a subgroup of the mobile communication devices (210, 220) which are connected to the communication network (10)
- location information and
- information on data items stored in each member of said subgroup, wherein
said location information and information on stored data items is regularly updated.

11. The method according to claim 10, wherein said location information comprises information on the relative transmission range between members of said subgroup.

12. The method according to claim 10 or 11, wherein
- the network controller element (300) generates a schedule for future peer-to-peer connections depending on the stored location information and information on data items stored in the mobile communication devices (210, 220) and
- the network controller element (300) generates at least one control signal depending on said schedule.

13. The method according to any one of claims 9 to 12, comprising the step of
- transmitting at least one of said data portions to a selected mobile communication device (210) via a base station (150) of the communication network (10), when after a pre-defined time interval said selected mobile communication device (210) has received said at least one data portion neither via base stations (150) of the communication network (10) nor by means of a peer-to-peer communication.

14. The method according to any one of the preceding claims, wherein pre-defined data is provided within the memory of said first mobile communication device and the first mobile communication device requests to transmit said pre-defined data at least to the second mobile communication device.

15. The method according to claim 14, wherein said data signal transmitted via a peer-to-peer connection between the first and the second mobile communication device comprises at least part of said pre-defined data.

16. The method according to claim 14 or 15, wherein a copy of at least part of said pre-defined data is transmitted to a network controller element to be distributed to at least one mobile communication device outside of the transmission range of said first mobile communication device.

17. The method according to any one of the preceding claims, wherein the communication network (10) is a cellular network or a WLAN network.

18. A mobile communication device (400) for use in a wireless infrastructure based communication network (10), comprising
- transceiver means (420) for wireless communication,
- processing means (410) for processing a control signal received via said transceiver means (420) from a base station (150) of a wireless infrastructure communication network (10),
- controlling means (410) for retrieving at least one data item from a memory of the mobile communication device (400) and for automatically initiating transmission of a data signal comprising said at least one data item from the mobile communication device (400) to a second mobile communication device in response to receiving said control signal, wherein the data signal is transmitted via a peer-to-peer connection between the mobile communication device (400) and said second mobile communication device, **characterized in that** the data signal is transmitted by the mobile communication device (400) during an established communication session between the base station (150) and the mobile communication device (400).

19. The mobile communication device of claim 18, wherein said control signal comprises parameters of a peer-to-peer connection defining
- at least one mobile communication device to be connected,
- a power level to be used for transmission,
- a duration of the transmission, and
- a wireless channel to be used for transmission.

20. The mobile communication device of any one of the preceding claims, adapted for simultaneous wireless communication with said base station (150) and said second mobile communication device, wherein the communication with the second mobile communication device is a peer-to-peer communication.

21. The mobile communication device of any one of the preceding claims, adapted for receiving a peer-to-peer transmission from a second mobile communication device.

22. The mobile communication device of any one of the preceding claims, further comprising means for detecting other mobile communication devices within transmission range.

23. The mobile communication device of any one of the preceding claims, adapted to transmit a request for receiving pre-defined data to a network controller element (300) of said network (10).

24. The mobile communication device of any one of the preceding claims, adapted to transmit a transmission request to a network controller element (300) of said network (10), wherein said transmission request is a request to transmit pre-defined data stored in a memory of the device to at least one other mobile communication device.

25. A wireless infrastructure communication system (10), adapted for performing a method according to any one of the claims 1 to 17, comprising
- a plurality of base stations (150),
- at least one network controller element (300) connectable to said base stations (150), and
- a plurality of mobile communication devices (210, 220) according to any one of claims 18 to 24.

26. The wireless infrastructure communication system of claim 25, wherein the network controller element (300) comprises
- a memory (350, 360) for storing for each of at least a subgroup of the mobile communication devices (210, 220), which are connected to said communication network (10), location information and information on data items available from each member of said subgroup,
- controlling means (320) for coordinating the distribution of pre-defined data to said subgroup of mobile communication devices (210,220), and
- generating means (330) for generating control signals to be transmitted to a selected mobile communication device (220), said control signal comprising parameters for peer-to-peer connections of pairs of members of said subgroup, wherein the network controller element (300) is adapted to divide said pre-defined data into data portions, to transmit different of said data portions to different mobile communication devices (210, 220) via base stations (150) of the communication network (10), and to generate control signals for spreading the data portions between the mobile communication devices (210, 220) by means of peer-to-peer connections.

27. The wireless infrastructure communication system of claim 26, wherein each of said control signals comprises parameters for an individual peer-to-peer connection defining
- at least one mobile communication device to be connected,
- a power level to be used for transmission,
- a duration of the transmission, and
- a wireless channel to be used for transmission.

28. The wireless infrastructure communication system of claim 26 or 27, wherein each control signal comprises information defining at least one data item to be transmitted, wherein said data item is stored in the mobile communication device (220) to which the control signal is to be transmitted.

29. The wireless infrastructure communication system of any one of the claims 26 to 28, wherein said location information comprises information on the relative transmission range between members of said subgroup.

30. The wireless infrastructure communication system of any one of the claims 26 to 29, comprising monitoring means (340) for monitoring data traffic between mobile communication devices (210, 220) connected to the communication network (10).

31. The wireless infrastructure communication system of any one of the claims 26 to 30, comprising receiving means (320) for receiving data requests from mobile communication devices (210, 220) connected to the communication network (10).

32. The wireless infrastructure communication system of any one of the claims 26 to 31, adapted to receive said pre-defined data from a mobile communication device.

33. The wireless infrastructure communication system of claim 32, adapted to, in response to receiving a transmission request from the mobile communication device, instruct the mobile communication device to send a copy of the pre-defined data to the network controller element.

34. The wireless infrastructure communication system of any one of the claims 26 to 33, wherein said controlling means (320) comprises scheduling means for generating a schedule for future peer-to-peer connections depending on the stored location information and on the stored information on data items available from the members of said subgroup.

35. A digital storage medium, comprising electronically readable control instructions for controlling a first mobile communication device (220) adapted to execute a process comprising the steps of
- retrieving at least one data item from a memory of the first mobile communication device (220),
- processing a control signal received from a base station (150) of a wireless infrastructure communication network (10),
- transmitting a data signal comprising said at least one data item from the first mobile communication device (220) to the second mobile communication device (210) in response to receiving said control signal, wherein the data signal is transmitted via a peer-to-peer connection between the first (220) and the second (210) mobile communication devices, **characterized in that** the data signal is transmitted by the first mobile communication device (220) during an established communication session between the first mobile communication device (220) and the base station (150).

## Patentansprüche

1. Verfahren für die Datenkommunikation in einem Kommunikationsnetz auf Grundlage einer drahtlosen Infrastruktur (10), mit folgenden Schritten:
- Erzeugung eines Steuersignals durch ein Netzsteuerelement (300),
- Übertragung des Steuersignals von einer Basisstation (150)zu einer ersten mobilen Kommunikationsvorrichtung (220),
- Abruf von mindestens einem Datenelement aus einem Speicher der ersten mobilen Kommunikationsvorrichtung (220) und
- Übertragung eines Datensignals, das mindestens ein Datenelement aus der ersten mobilen Kommunikationsvorrichtung (220) zu einer zweiten mobilen Kommunikationsvorrichtung (210) als Reaktion auf
den Empfang des Steuersignals enthält, wobei das Datensignal über eine Peer-to-Peer-Verbindung zwischen der ersten (220) und der zweiten (210) mobilen Kommunikationsvorrichtung übertragen wird,
**dadurch gekennzeichnet, dass** das Datensignal von der ersten mobilen Kommunikationsvorrichtung (220) während einer aufgebauten Kommunikationssitzung zwischen der ersten Basisstation (150) und der ersten mobilen Kommunikationsvorrichtung (220) übertragen wird.

2. Verfahren nach Anspruch 1, wobei das Steuersignal Parameter der Peer-to-Peer-Verbindung umfasst, welche
- mindestens eine zu verbindende mobile Kommunikationsvorrichtung (210),
- einen für die Übertragung zu nutzenden Leistungspegel,
- eine Übertragungsdauer und
- einen für die Übertragung zu nutzenden Funkkanal festlegen.

3. Verfahren nach einem der vorstehenden Ansprüche, wobei das Steuersignal Informationen zur Auswahl von mindestens einem zu übertragenden Datenelement enthält.

4. Verfahren nach einem der vorstehenden Ansprüche, wobei die Dauer der Peer-to-Peer-Verbindung so kurz ist, dass die bestehende Kommunikationssitzung zwischen der ersten mobilen Kommunikationsvorrichtung (220) und der Basisstation (150) nicht beendet wird.

5. Verfahren nach einem der vorstehenden Ansprüche, wobei sich die erste (220) und zweite (210) Kommunikationsvorrichtung im jeweiligen Funkversorgungsbereich verschiedener Basisstationen (150) befindet, wenn der Schritt der Übertragung des Datensignals über eine Peer-to-Peer-Verbindung von der ersten mobilen Kommunikationsvorrichtung (220) vollzogen wird.

6. Verfahren nach einem der vorstehenden Ansprüche, umfassend folgende Schritte:
- Überwachung des Datenverkehrs zwischen der ersten (220) und der zweiten (210) mobilen Kommunikationsvorrichtung und
- Übertragung des Steuersignals, wenn
- eine Kommunikation zwischen der ersten (220) und der zweiten (210) mobilen Kommunikationsvorrichtung über das Infrastruktur-Kommunikationsnetz mit einer vorgegebenen Dauer festgestellt wird und
- sich die erste (220) und die zweite (210) Kommunikationsvorrichtung in einer wechselseitigen übertragungstechnischen Reichweite befinden.

7. Verfahren nach einem der vorstehenden Ansprüche, wobei die erste mobile Kommunikationsvorrichtung (220) vor dem Schritt der Übertragung des Steuersignals das mindestens eine Datenelement empfängt und speichert, wenn sie sich im Funkversorgungsbereich einer ersten Basisstation (150) befindet, und wobei der Schritt der Übertragung des Datensignals über eine Peer-to-Peer-Verbindung von der ersten mobilen Kommunikationsvorrichtung ausgeführt wird, wenn sie sich im Funkversorgungsbereich einer zweiten Basisstation (150) befindet.

8. Verfahren nach einem der vorstehenden Ansprüche, wobei die zweite mobile Kommunikationsvorrichtung (210) den Empfang von Daten von einem Server (110, 120, 130) anfordert, der mit dem Kommunikationsnetz (10) verbunden ist, und wobei das in der ersten mobilen Kommunikationsvorrichtung (220) gespeicherte Datenelement eine Kopie von mindestens einem Teil der angeforderten Daten ist.

9. Verfahren nach einem der vorstehenden Ansprüche, wobei vorgegebene Daten von einem Medienserver (110, 120, 130) aus, der an das Kommunikationsnetz (10) angeschlossen werden kann, an eine Vielzahl von mobilen Kommunikationsvorrichtungen verteilt werden, mit folgenden Schritten:
- Teilung der vorgegebenen Daten in Datenteile,
- Übertragung verschiedener der Datenteile an verschiedene mobile Kommunikationsvorrichtungen (210, 220) über Basisstationen (150) des Kommunikationsnetzes (10),
- Verbreitung der Datenteile zwischen den mobilen Kommunikationsvorrichtungen (210, 220) mit Hilfe von Peer-to-Peer-Verbindungen, die zentral durch das Netzsteuerelement (300) gesteuert werden.

10. Verfahren nach Anspruch 9, wobei das Netzsteuerelement (300) für jede, mindestens jedoch eine Untergruppe der mobilen Kommunikationsvorrichtungen (210, 220), die mit dem Kommunikationsnetz (10) verbunden sind, Folgendes empfängt und speichert:
- Standortinformationen sowie
- Informationen über Datenelementen, die in jedem Element der Untergruppe gespeichert sind, wobei die Standortinformationen und die Informationen über gespeicherte Datenelemente regelmäßig aktualisiert werden.

11. Verfahren nach Anspruch 10, wobei die Standortinformationen Informationen über die relative Sendereichweite zwischen den Elementen der Untergruppe enthalten.

12. Verfahren nach Anspruch 10 oder 11, wobei
- das Netzsteuerelement (300) in Abhängigkeit von den gespeicherten Standortinformationen und den Informationen zu den Datenelementen, die in den mobilen Kommunikationsvorrichtungen (210, 220) gespeichert sind, einen Zeitplan für künftige Peer-to-Peer-Verbindungen generiert, und
- das Netzsteuerelement (300) in Abhängigkeit vom Zeitplan mindestens ein Steuersignal generiert.

13. Verfahren nach einem der vorstehenden Ansprüche 9 bis 12, mit folgendem Schritt:
- Übertragung von mindestens einem der Datenteile über eine Basisstation (150) des Kommunikationsnetzes (10) an eine ausgewählte mobile Kommunikationsvorrichtung (210), wenn die ausgewählte Kommunikationsvorrichtung (210) nach einem vorgegebenen Zeitintervall den mindestens einen Datenteil weder über die Basisstationen (150) des Kommunikationsnetzes (10) noch mittels Peer-to-Peer-Kommunikation empfangen hat.

14. Verfahren nach einem der vorstehenden Ansprüche, wobei vorgegebene Daten im Speicher der ersten mobilen Kommunikationsvorrichtung bereitgestellt werden und die erste mobile Kommunikationsvorrichtung die Übertragung der vorgegebenen Daten zumindest an die zweite mobile Kommunikationsvorrichtung anfordert.

15. Verfahren nach Anspruch 14, wobei das über eine Peer-to-Peer-Verbindung übertragene Datensignal zwischen der ersten und der zweiten mobilen Kommunikationsvorrichtung mindestens einen Teil der vorgegebenen Daten enthält.

16. Verfahren nach Anspruch 14 oder 15, wobei eine Kopie von mindestens einem Teil der vorgegebenen Daten zur Verteilung an mindestens eine mobile Kommunikationsvorrichtung, die außerhalb der Übertragungsreichweite der ersten mobilen Kommunikationsvorrichtung liegt, an ein Netzsteuerelement übertragen wird.

17. Verfahren nach einem der vorstehenden Ansprüche, wobei es sich bei dem Kommunikationsnetz (10) um ein Mobilfunknetz oder ein WLAN-Netz handelt.

18. Mobile Kommunikationsvorrichtung (400) zur Nutzung in einem Kommunikationsnetz (10) auf Grundlage einer drahtlosen Infrastruktur, mit folgenden Merkmalen:
- Sende-Empfangseinrichtung (420) zur drahtlosen Kommunikation,
- Verarbeitungsmittel (410) zur Verarbeitung eines Steuersignals, welches von einer Basisstation (150) eines Kommunikationsnetzes mit drahtloser Infrastruktur (10) über die Sende-Empfangseinrichtung (420) empfangen wird,
- Steuerungsmittel (410) zum Abrufen von mindestens einem Datenelement aus einem Speicher der mobilen Kommunikationsvorrichtung (400) und zur automatischen Einleitung der Übertragung eines Datensignals, das mindestens das genannte, mindestens ein Datenelement aus der mobilen Kommunikationsvorrichtung (400) enthält, an eine zweite Kommunikationsvorrichtung als Reaktion auf den Empfang des Steuersignals, wobei das Datensignal über eine Peer-to-Peer-Verbindung zwischen der mobilen Kommunikationsvorrichtung (400) und der genannten zweiten mobilen Kommunikationsvorrichtung übertragen wird, **dadurch gekennzeichnet, dass** das Datensignal von der mobilen Kommunikationsvorrichtung (400) während einer aufgebauten Kommunikationssitzung zwischen der Basisstation (150) und der mobilen Kommunikationsvorrichtung (400) übertragen wird.

19. Mobile Kommunikationsvorrichtung aus Anspruch 18, wobei das Steuersignal Parameter der Peer-to-Peer-Verbindung umfasst, welche
- mindestens eine zu verbindende mobile Kommunikationsvorrichtung,
- einen für die Übertragung zu nutzenden Leistungspegel,
- eine Übertragungsdauer und
- einen für die Übertragung zu nutzenden Funkkanal festlegen.

20. Mobile Kommunikationsvorrichtung nach einem der vorstehenden Ansprüche, angepasst für die gleichzeitige drahtlose Kommunikation mit der Basisstation (150) und der zweiten mobilen Kommunikationsvorrichtung, wobei die Kommunikation mit der zweiten mobilen Kommunikationsvorrichtung eine Peer-to-Peer-Kommunikation ist.

21. Mobile Kommunikationsvorrichtung nach einem der vorstehenden Ansprüche, angepasst für den Empfang von Peer-to-Peer-Übertragungen von einer zweiten mobilen Kommunikationsvorrichtung.

22. Mobile Kommunikationsvorrichtung nach einem der vorstehenden Ansprüche, die zusätzlich Mittel zur Erkennung weiterer mobiler Kommunikationsvorrichtungen innerhalb der Übertragungsreichweite enthält.

23. Mobile Kommunikationsvorrichtung nach einem der vorstehenden Ansprüche, angepasst zum Senden einer Anforderung zum Empfangen von vorgegebenen Daten an ein Netzsteuerelement (300) des Netzes (10).

24. Mobile Kommunikationsvorrichtung nach einem der vorstehenden Ansprüche, angepasst zur Übertragung einer Übertragungsanforderung an ein Netzsteuerelement (300) des Netzes (10), wobei es sich bei der genannten Übertragungsanforderung um eine Anforderung zur Übertragung vorgegebener, in einem Speicher der Vorrichtung gespeicherter Daten an mindestens eine weitere mobile Kommunikationsvorrichtung handelt.

25. Drahtloses Infrastruktur-Kommunikationssystem (10), angepasst zur Ausführung eines Verfahrens nach einem der Ansprüche 1 bis 17, umfassend:
- eine Vielzahl von Basisstationen (150),
- mindestens ein, an die Basisstationen (150) anschließbares Netzsteuerelement (300) und
- eine Vielzahl von mobilen Kommunikationsvorrichtungen (210, 220), entsprechend einem der Ansprüche 18 bis 24.

26. Drahtloses Infrastruktur-Kommunikationssystem nach Anspruch 25, wobei das Netzsteuerelement (300) folgende Merkmale umfasst:
- einen Speicher (350, 360) zum Speichern jeder, d. h. mindestens einer Untergruppe der mobilen Kommunikationsvorrichtungen (210, 220), die mit dem Kommunikationsnetz (10) verbunden sind, Standortinformationen und Informationen über Datenelemente die, von den einzelnen Elementen der Untergruppe erhältlich sind,
- Steuerungsmittel (320) zur Koordinierung der Verteilung vorgegebener Daten an die genannte Untergruppe der mobilen Kommunikationsvorrichtungen (210, 220) und
- Erzeugungsmittel (330) zur Generierung von Steuersignalen, die an eine ausgewählte mobile Kommunikationsvorrichtung (220) zu übertragen sind, wobei das Steuersignal Parameter für Peer-to-Peer-Verbindungen von Elementpaaren der genannten Untergruppe enthält und das Netzsteuerelement (300) zur Aufteilung der vorgegebenen Daten in Datenteile angepasst ist, um verschiedene Datenteile an verschiedene mobile Kommunikationsvorrichtungen (210, 220) über Basisstationen (150) des Kommunikationsnetzes (10) zu übertragen und um Steuersignale zur Verbreitung der Datenteile zwischen den mobilen Kommunikationsvorrichtungen (210, 220) mittels Peer-to-Peer-Verbindungen zu generieren.

27. Drahtloses Infrastruktur-Kommunikationssystem nach Anspruch 26, wobei jedes der Steuersignal Parameter für eine einzelne Peer-to-Peer-Verbindung umfasst, welche
- mindestens eine zu verbindende mobile Kommunikationsvorrichtung,
- einen für die Übertragung zu nutzenden Leistungspegel,
- eine Übertragungsdauer und
- einen für die Übertragung zu nutzenden Funkkanal festlegen.

28. Drahtloses Infrastruktur-Kommunikationssystem nach Anspruch 26 oder 27, wobei jedes Steuersignal Informationen enthält, die mindestens ein zu übertragendes Datenelement festlegen, und das Datenelement in der mobilen Kommunikationsvorrichtung (220) gespeichert ist, an die das Steuersignal übertragen wird.

29. Drahtloses Infrastruktur-Kommunikationssystem nach einem der Ansprüche 26 bis 28, wobei die Standortinformationen Informationen über die relative Übertragungsreichweite zwischen den Elementen der Untergruppe enthalten.

30. Drahtloses Infrastruktur-Kommunikationssystem nach einem der Ansprüche 26 bis 29, umfassend aus Überwachungsmittel (340) zur Überwachung des Datenverkehrs zwischen mobilen Kommunikationsvorrichtungen (210, 220), die mit dem Kommunikationsnetz (10) verbunden sind.

31. Drahtloses Infrastruktur-Kommunikationssystem nach einem der Ansprüche 26 bis 30, umfassend aus Empfangsmittel (320) für den Empfang der Datenanforderungen von mobilen Kommunikationsvorrichtungen (210, 220), die mit dem Kommunikationsnetz (10) verbunden sind.

32. Drahtloses Infrastruktur-Kommunikationssystem nach einem der Ansprüche 26 bis 31, angepasst für den Empfang der vorgegebenen Daten von einer mobilen Kommunikationsvorrichtung.

33. Drahtloses Infrastruktur-Kommunikationssystem nach Anspruch 32, angepasst zur Erteilung der Anweisung an die mobile Kommunikationsvorrichtung, als Reaktion auf den Empfang einer Sendeanforderung von der mobilen Kommunikationsvorrichtung eine Kopie der vorgegebenen Daten an das Netzsteuerelement zu senden.

34. Drahtloses Infrastruktur-Kommunikationssystem nach einem der Ansprüche 26 bis 33, wobei das Steuerungsmittel (320) Planungsmittel zum Generieren eines Zeitplans für künftige Peer-to-Peer-Verbindungen enthält, die von den gespeicherten Standortinformationen und den gespeicherten Informationen zu Datenelementen abhängen, die bei den Elementen der Untergruppe verfügbar sind.

35. Digitales Speichermedium, das elektronisch lesbare Steueranweisungen zur Steuerung einer ersten mobilen Kommunikationsvorrichtung (220) enthält, das zur Ausführung eines Verfahrens angepasst ist, welches die folgenden Schritte umfasst:
- Abruf von mindestens einem Datenelement aus einem Speicher der ersten mobilen Kommunikationsvorrichtung 220), und
- Verarbeitung eines aus einer Basisstation (150) eines drahtlosen Infrastruktur-Kommunikationsnetzes (10) empfangenen Steuersignals,
- Übertragung eines Datensignals, das mindestens das eine Datenelement von der ersten mobilen Kommunikationsvorrichtung (220) enthält, an die zweite mobile Kommunikationsvorrichtung (210) als Reaktion auf den Empfang des Steuersignals, wobei das Datensignal über eine Peer-to-Peer-Verbindung zwischen der ersten (220) und der zweiten mobilen Kommunikationsvorrichtung (210) übertragen wird, **dadurch gekennzeichnet, dass** das Datensignal von der mobilen Kommunikationsvorrichtung (220) während einer aufgebauten Kommunikationssitzung zwischen der der ersten mobilen Kommunikationsvorrichtung (220) und der Basisstation (150) übertragen wird.

## Revendications

1. Procédé de communication de données dans un réseau de communication d'infrastructure sans fil (10), comprenant les étapes consistant à
- générer un signal de commande par un élément de contrôleur réseau (300),
- transmettre ledit signal de commande depuis une station de base (150) vers un premier dispositif de communication mobile (220),
- récupérer au moins un élément de données depuis une mémoire du premier dispositif de communication mobile (220), et
- transmettre un signal de données comprenant ledit au moins un élément de données depuis le premier dispositif de communication mobile (220) vers un second dispositif de communication mobile (210) en réponse à la réception dudit signal de commande, dans lequel
le signal de données est transmis par une connexion poste-à-poste entre le premier (220) et le second (210) dispositif de communication mobile, **caractérisé en ce que** le signal de données est transmis par le premier dispositif de communication mobile (220) pendant une session de communication établie entre la station de base (150) et le premier dispositif de communication mobile (220).

2. Procédé selon la revendication 1, dans lequel le signal de commande comprend des paramètres de la connexion poste-à-poste définissant
- au moins un dispositif de communication mobile (210) devant être connecté,
- un niveau de puissance devant être utilisé pour la transmission,
- une durée de la transmission, et
- un canal sans fil devant être utilisé pour la transmission.

3. Procédé selon l'une quelconque des revendications précédentes, dans lequel le signal de commande comprend des informations pour sélectionner au moins un élément de données devant être transmis.

4. Procédé selon l'une quelconque des revendications précédentes, dans lequel la durée de la connexion poste-à-poste est suffisamment brève pour ne pas terminer la session de communication établie entre le premier dispositif de communication mobile (220) et la station de base (150).

5. Procédé selon l'une quelconque des revendications précédentes, dans lequel lesdits premier (220) et second (210) dispositifs de communication mobiles sont situés dans la zone de couverture respective de différentes stations de base (150) lorsque l'étape de transmission du signal de données par une connexion poste-à-poste est effectuée par le premier dispositif de communication mobile (220).

6. Procédé selon l'une quelconque des revendications précédentes, comprenant les étapes consistant à
- surveiller le trafic de données entre les premier (220) et second (210) dispositifs de communication mobiles, et
- transmettre le signal de commande lorsque
- une communication entre le premier (220) et le second (210) dispositif de communication mobile par l'intermédiaire du réseau de communication d'infrastructure durant un temps prédéfini est détectée et
- le premier (220) et le second (210) dispositif de communication mobile sont dans la plage de transmission l'un de l'autre.

7. Procédé selon l'une quelconque des revendications précédentes, dans lequel, avant l'étape de transmission du signal de commande, le premier dispositif de communication mobile (220) reçoit et stocke le au moins un élément de données lorsqu'il est situé dans la zone de couverture d'une première station de base (150), et dans lequel l'étape de transmission du signal de données par une communication poste-à-poste est effectuée par le premier dispositif de communication mobile lorsqu'il est situé dans la zone de couverture d'une seconde station de base (150).

8. Procédé selon l'une quelconque des revendications précédentes, dans lequel ledit second dispositif de communication mobile (210) demande à recevoir des données d'un serveur (110, 120, 130) connecté au réseau de communication (10), et dans lequel ledit élément de données stocké dans le premier dispositif de communication mobile (220) est une copie d'au moins une partie des données demandées.

9. Procédé selon l'une quelconque des revendications précédentes, dans lequel les données prédéfinies sont distribuées à une pluralité de dispositifs de communication mobiles depuis un serveur de média (110, 120, 130) pouvant être connecté au réseau de communication (10), comprenant les étapes consistant à
- diviser lesdites données prédéfinies en parties de données,
- transmettre différentes parties desdites parties de données à différents dispositifs de communication mobiles (210, 220) par l'intermédiaire des stations de base (150) du réseau de communication (10),
- diffuser les parties de données entre les dispositifs de communication mobiles (210, 220) au moyen de connexions poste-à-poste contrôlées centralement par l'élément de contrôleur réseau (300).

10. Procédé selon la revendication 9, dans lequel ledit élément de contrôleur réseau (300) reçoit et stocke pour chacun d'au moins un sous-groupe des dispositifs de communication mobiles (210, 220) qui sont connectés au réseau de communication (10)
- des informations de localisation et
- des informations sur les éléments de données stockés dans chaque membre dudit sous-groupe, dans lequel
lesdites informations de localisation et informations sur les éléments de données stockés sont mises à jour régulièrement.

11. Procédé selon la revendication 10, dans lequel lesdites informations de localisation comprennent des informations sur la plage de transmission relative entre les membres dudit sous-groupe.

12. Procédé selon la revendication 10 ou 11, dans lequel
- l'élément de contrôleur réseau (300) génère une planification pour les futures connexions poste-à-poste en fonction des informations de localisation stockées et des informations sur les éléments de données stockés dans les dispositifs de communication mobiles (210, 220) et
- l'élément de contrôleur de réseau (300) génère au moins un signal de commande en fonction de ladite planification.

13. Procédé selon l'une quelconque des revendications 9 à 12, comprenant les étapes consistant à
- transmettre au moins une desdites parties de données à un dispositif de communication mobile sélectionné (210) par l'intermédiaire d'une station de base (150) du réseau de communication (10) lorsque, après un intervalle de temps prédéfini, ledit dispositif de communication mobile sélectionné (210) a reçu ladite au moins une partie de données ni par l'intermédiaire des stations de base (150) du réseau de communication (10), ni au moyen d'une communication poste-à-poste.

14. Procédé selon l'une quelconque des revendications précédentes, dans lequel des données prédéfinies sont fournies dans la mémoire dudit premier dispositif de communication mobile et le premier dispositif de communication mobile demande à transmettre lesdites données prédéfmies au moins au second dispositif de communication mobile.

15. Procédé selon la revendication 14, dans lequel ledit signal de données transmis par une connexion poste-à-poste entre le premier et le second dispositif de communication mobile comprend au moins une partie desdites données prédéfinies.

16. Procédé selon la revendication 14 ou 15, dans lequel une copie d'au moins une partie desdites données prédéfinies est transmise à un élément de contrôleur réseau pour être distribuée à au moins un dispositif de communication mobile en dehors de la plage de transmission dudit premier dispositif de communication mobile.

17. Procédé selon l'une quelconque des revendications précédentes, dans lequel le réseau de communication (10) est un réseau cellulaire ou un réseau WLAN.

18. Dispositif de communication mobile (400) destiné à être utilisé dans un réseau de communication d'infrastructure sans fil (10), comprenant
- un moyen d'émission-réception (420) pour la communication sans fil,
- un moyen de traitement (410) pour traiter un signal de commande reçu par l'intermédiaire dudit moyen d'émission-réception (420) depuis une station de base (150) d'un réseau de communication d'infrastructure sans fil (10),
- un moyen de commande (410) pour récupérer au moins un élément de données depuis une mémoire du dispositif de communication mobile (400) et pour lancer automatiquement la transmission d'un signal de données comprenant ledit au moins un élément de données depuis le dispositif de communication mobile (400) vers un second dispositif de communication mobile en réponse à la réception dudit signal de commande, dans lequel le signal de données est transmis par une connexion poste-à-poste entre le dispositif de communication mobile (400) et ledit second dispositif de communication mobile, **caractérisé en ce que** le signal de données est transmis par le dispositif de communication mobile (400) pendant une session de communication établie entre la station de base (150) et le dispositif de communication mobile (400).

19. Dispositif de communication mobile selon la revendication 18, dans lequel ledit signal de commande comprend des paramètres d'une connexion poste-à-poste définissant
- au moins un dispositif de communication mobile devant être connecté,
- un niveau de puissance devant être utilisé pour la transmission,
- une durée de la transmission, et
- un canal sans fil devant être utilisé pour la transmission.

20. Dispositif de communication mobile selon l'une quelconque des revendications précédentes, adapté pour une communication sans fil simultanée avec ladite station de base (150) et ledit second dispositif de communication mobile, dans lequel la communication avec le second dispositif de communication mobile est une communication poste-à-poste.

21. Dispositif de communication mobile selon l'une quelconque des revendications précédentes, adapté pour recevoir une transmission poste-à-poste depuis un second dispositif de communication mobile.

22. Dispositif de communication mobile selon l'une quelconque des revendications précédentes, comprenant en outre un moyen pour détecter les autres dispositifs de communication mobiles dans la plage de transmission.

23. Dispositif de communication mobile selon l'une quelconque des revendications précédentes, adapté pour transmettre une demande pour recevoir des données prédéfinies à un élément de contrôleur réseau (300) dudit réseau (10).

24. Dispositif de communication mobile selon l'une quelconque des revendications précédentes, adapté pour transmettre une demande de transmission à un élément de contrôleur réseau (300) dudit réseau (10), dans lequel ladite demande de transmission est une demande pour transmettre des données prédéfinies stockées dans une mémoire du dispositif à au moins un autre dispositif de communication mobile.

25. Système de communication à infrastructure sans fil (10), adapté pour mettre en oeuvre un procédé selon l'une quelconque des revendications 1 à 17, comprenant
- une pluralité de stations de base (150),
- au moins un élément de contrôleur réseau (300) pouvant être connecté auxdites stations de base (150), et
- une pluralité de dispositifs de communication mobiles (210, 220) selon l'une quelconque des revendications 18 à 24.

26. Système de communication à infrastructure sans fil selon la revendication 25, dans lequel l'élément de contrôleur de réseau (300) comprend
- une mémoire (350, 360) pour stocker pour chacun d'au moins un sous-groupe des dispositifs de communication mobile (210, 220) qui sont connectés audit réseau de communication (10), des informations de localisation et des informations sur des éléments de données disponibles auprès de chaque membre dudit sous-groupe,
- un moyen de commande (320) pour coordonner la distribution des données prédéfinies audit sous-groupe de dispositifs de communication mobiles (210, 220), et
- un moyen de génération (330) pour générer des signaux de commande devant être transmis à un dispositif de communication mobile sélectionné (220), ledit signal de commande comprenant des paramètres pour les connexions poste-à-poste de paires de membres dudit sous-groupe, dans lequel l'élément de contrôleur réseau (300) est adapté pour diviser lesdites données prédéfinies en parties de données, pour transmettre différentes parties desdites parties de données à différents dispositifs de communication mobiles (210, 220) par l'intermédiaire des stations de base (150) du réseau de communication (10), et pour générer des signaux de commande pour diffuser les parties de données entre les dispositifs de communication mobiles (210, 220) au moyen de connexions poste-à-poste.

27. Système de communication à infrastructure sans fil selon la revendication 26, dans lequel chacun desdits signaux de commande comprend des paramètres pour une connexion poste-à-poste individuelle définissant
- au moins un dispositif de communication mobile devant être connecté,
- un niveau de puissance devant être utilisé pour la transmission,
- une durée de la transmission, et
- un canal sans fil devant être utilisé pour la transmission.

28. Système de communication à infrastructure sans fil selon la revendication 26 ou 27, dans lequel chaque signal de commande comprend des informations définissant au moins un élément de données devant être transmis, dans lequel ledit élément de données est stocké dans le dispositif de communication mobile (220) auquel le signal de commande doit être transmis.

29. Système de communication à infrastructure sans fil selon l'une quelconque des revendications 26 à 28, dans lequel lesdites informations de localisation comprennent des informations sur la plage de transmission relative entre les membres dudit sous-groupe.

30. Système de communication à infrastructure sans fil selon l'une quelconque des revendications 26 à 29, comprenant un moyen de surveillance (340) pour surveiller le trafic de données entre les dispositifs de communication mobiles (210, 220) connectés au réseau de communication (10).

31. Système de communication à infrastructure sans fil selon l'une quelconque des revendications 26 à 30, comprenant un moyen de réception (320) pour recevoir des demandes de données des dispositifs de communication mobiles (210, 220) connectés au réseau de communication (10).

32. Système de communication à infrastructure sans fil selon l'une quelconque des revendications 26 à 31, adapté pour recevoir lesdites données prédéfinies d'un dispositif de communication mobile.

33. Système de communication à infrastructure sans fil selon la revendication 32, adapté pour, en réponse à la réception d'une demande de transmission du dispositif de communication mobile, ordonner au dispositif de communication mobile d'envoyer une copie des données prédéfinies à l'élément de contrôleur réseau.

34. Système de communication à infrastructure sans fil selon l'une quelconque des revendications 26 à 33, dans lequel ledit moyen de commande (320) comprend un moyen de planification pour générer une planification pour les futures connexions poste-à-poste en fonction des informations de localisation stockées et des informations stockées sur les éléments de données disponibles auprès des membres dudit sous-groupe.

35. Support de stockage numérique, comprenant des instructions de commande lisibles par voie électronique pour commander un premier dispositif de communication mobile (220) adapté pour exécuté un processus comprenant les étapes consistant à
- récupérer au moins un élément de données depuis une mémoire du premier dispositif de communication mobile (220),
- traiter un signal de commande reçu depuis une station de base (150) d'un réseau de communication d'infrastructure sans fil (10),
- transmettre un signal de données comprenant ledit au moins un élément de données depuis le premier dispositif de communication mobile (220) vers le second dispositif de communication mobile (210) en réponse à la réception dudit signal de commande, et
dans lequel
le signal de données est transmis par une connexion poste-à-poste entre le premier (220) et le second (210) dispositif de communication mobile, **caractérisé en ce que** le signal de données est transmis par le premier dispositif de communication (220) pendant une session de communication établie entre le premier dispositif de communication mobile (220) et la station de base (150).
